# EUROPÄISCHE PATENTSCHRIFT

(11) **EP 3 503 628 B1**
(45) Veröffentlichungstag und Bekanntmachung des Hinweises auf die Patenterteilung: **18.03.2020**
(21) Anmeldenummer: 17210052.1
(22) Anmeldetag: 22.12.2017
(51) Int. Cl.: H04W 48/14, H04L 29/08, H04W 16/04, H04W 8/06, H04W 84/04

(54) **BOOTSTRAP-SERVER UND VERFAHREN ZUM AUFBAUEN EINER ROAMING-VERBINDUNG ÜBER EINEN BOOTSTRAP-SERVER**
BOOTSTRAP SERVER AND METHOD FOR ESTABLISHING A ROAMING CONNECTION OVER A BOOTSTRAP SERVER
SERVEUR D'AMORÇAGE ET PROCÉDÉ DESTINÉ AU MONTAGE D'UNE LIAISON D'ITINÉRANCE AU MOYEN D'UN SERVEUR D'AMORÇAGE

(43) Veröffentlichungstag der Anmeldung: 26.06.2019
(73) Patentinhaber: Deutsche Telekom AG, 53113 Bonn (DE)
(72) Erfinder: Lauster, Reinhard, 3100 St. Pölten (AT)
(74) Vertreter: Vossius & Partner Patentanwälte Rechtsanwälte mbB

(56) Entgegenhaltungen:
- QUALCOMM INCORPORATED ET AL: "TS 23.502: Network sharing in NG RAN; 3GPP DRAFT S2-178037", 3RD GENERATION PARTNERSHIP PROJECT (3GPP) , 30. Oktober 2017 (2017-10-30), XP051360654, Gefunden im Internet: URL:http://www.3gpp.org/ftp/tsg_sa/WG2_Arc h/TSGS2_123_Ljubljana/Docs/ [gefunden am 2017-10-30]
- SAMSUNG ET AL: "Clean-up of roaming sub-clause of network slicing; 3GPP DRAFT S2-179426", 3RD GENERATION PARTNERSHIP PROJECT (3GPP) , 30. November 2017 (2017-11-30), XP051365664, Gefunden im Internet: URL:http://www.3gpp.org/Meetings_3GPP_SYNC /SA2/_Update02/S2-179426 cleanup of roaming subclause of network slicing.doc [gefunden am 2017-11-30]

## Beschreibung

Die vorliegende Erfindung betrifft einen Bootstrap-Server und ein Verfahren zum Aufbauen einer Roaming-Verbindung über einen Bootstrap-Server, insbesondere über ein 5G Kommunikationsnetzwerk und einen Bootstrap-Server im besuchten PLMN (Public Land Mobile Network bzw. öffentliches terrestrisches Mobilfunknetz) des 5G Kommunikationssystems. Die Erfindung betrifft ferner ein entsprechendes Kommunikationsendgerät (User Equipment bzw. mobiles Terminal).

Betreiber weltweit bereiten sich derzeit auf den Übergang auf 5G-Netze vor. Um die breite Palette von Diensten zu unterstützen, die für 5G vorgesehen sind, ist ein neues Kernnetzwerk vorgesehen, das unter dem Namen "Next-Generation Core oder NG Core" bekannt ist. Seine Struktur ist beispielsweise in der technischen Spezifikation TS 23.501 (V1.5.0) der 3GPP beschrieben. Sie spezifiziert Anforderungen zum Entwerfen und Betreiben eines serviceorientierten 5G-Kernnetzwerk.

Im 3GPP DRAFT S2-178037 "TS 23.502: Network sharing in NG RAN" (XP051360654) wird das Teilen von Netzen in Next Generation RANs beschrieben.

Im 3GPP DRAFT S2-179426 "Clean-up of roaming sub-clause of network slicing" (XP051365664) wird das Network Slice Roaming Konzept in 5G Netzen dargelegt.

Das serviceorientierte 5G-Core-Netzwerk basiert auf der Prämisse, dass 5G sehr unterschiedliche Dienste mit sehr unterschiedlichen Leistungsanforderungen unterstützen soll. Es werden drei verschiedene Servicekategorien für 5G identifiziert: 1) Enhanced Mobile Broadband (eMBB), 2) massive Maschinentypkommunikation (mMTC, auch bekannt als loT, Internet of Things) und 3) Ultra-zuverlässige Kommunikation mit niedriger Latenz (UR-LLC).

Dies beinhaltet Anwendungsfälle bzw. Use Cases wie industrielle Kontrolle, Augmented Reality (AR) bzw. erweiterte Realität / virtuelle Realität (VR) und vernetzte Autos. Das Ziel ist die Verwendung von Ende-zu-Ende-Netzwerk Slices, um diese verschiedenen Dienstleistungen und Technologien auf eine physische Netzwerkinfrastruktur abzubilden und zu unterstützen. Auf diese Weise können Betreiber neue Dienste in fremden Netzwerksektoren betreiben und ihre Netzwerke in neue industrielle Wertschöpfungsketten einfügen.

Bei der Inbetriebnahme des Kommunikationsendgeräts, d.h. des mobilen Terminals, des Maschinenterminals wie z.B. des selbstfahrenden Autos oder der Drohne, auch allgemein als User Equipment (UE) bezeichnet, ist derzeit noch eine aufwendige Prozedur notwendig, wenn sich das UE im besuchten Netzwerk bzw. fremden Kommunikationsnetzwerk befindet. Diese Prozedur ist notwendig, um die Subscriber-Daten bzw. Teilnehmerdaten des UEs aus dem Heimatnetzwerk, auch Home PLMN (Public Land Mobile Network bzw. öffentliches terrestrisches Mobilfunknetz) zu holen und dem UE mitzuteilen. Bei diesen Teilnehmerdaten des UEs handelt es sich beispielsweise um Registrierungsdaten des UE, wie Identifikation und Telefonnummer, z.B. IMSI. Ferner werden zur Anmeldung im besuchten Netzwerk, auch als "Visited PLMN" bzw. besuchtes PLMN bezeichnet, Fähigkeiten (Capabilities) des besuchten PLMN, wie z.B. Netzwerktechnologie, Unterstützung bestimmter Dienste, etc. benötigt.

Es ist die Aufgabe der vorliegenden Erfindung, ein Konzept zu schaffen, um die oben genannten Probleme zu lösen, insbesondere die Verbindungsprozedur des UEs im besuchten PLMN zu beschleunigen und damit die Leistungsfähigkeit und Flexibilität der Kommunikation zu steigern, insbesondere beim Roaming in den oben beschriebenen 5G Kommunikationsnetzen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie oben beschrieben, beispielsweise einem Mobiltelefon bzw. Smartphone oder einer mobilen Einrichtung mit Mobilfunkadapter oder einem Maschinenterminal aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

Die im Folgenden vorgestellten Kommunikationsnetzwerke können verschiedene Technologien und Netzwerkstandards umfassen, beispielsweise entsprechend der 5G Systemarchitektur. Diese umfasst das Konzept des Network-Slicing. Network Slicing ist eine Form der virtuellen Netzwerkarchitektur, die die gleichen Prinzipien wie Software Defined Networking (SDN) und Network Functions Virtualization (NFV) in Festnetzen verwendet. SDN und NFV werden eingesetzt, um eine größere Netzwerkflexibilität zu erreichen, indem traditionelle Netzwerkarchitekturen in virtuelle Elemente partitioniert werden, die (auch über Software) miteinander verknüpft werden können.

Durch das Netzwerk-Slicing können mehrere virtuelle Netzwerke auf einer gemeinsamen physischen Infrastruktur erstellt werden. Die virtuellen Netzwerke werden dann an die spezifischen Anforderungen von Anwendungen, Diensten, Geräten, Kunden oder Betreibern angepasst.

Jedes virtuelle Netzwerk (Netzwerk-Slice) umfasst einen unabhängigen Satz logischer Netzwerkfunktionen, die die Anforderungen des jeweiligen Anwendungsfalls unterstützen, wobei sich der Begriff "logisch" auf Software bezieht.

Jeder dieser virtuellen Netzwerke bzw. Netzwerk-Slices wird optimiert, um die Ressourcen und die Netzwerktopologie für den bestimmten Dienst und Verkehr bereitzustellen, der das entsprechende Segment verwendet. Funktionen wie Geschwindigkeit, Kapazität, Konnektivität und Abdeckung werden zugewiesen, um die besonderen Anforderungen jedes Anwendungsfalls zu erfüllen, aber funktionale Komponenten können auch über verschiedene Netzwerk-Slices hinweg gemeinsam genutzt werden.

Jedes Netzwerk-Slice kann dabei vollständig isoliert sein, so dass kein Netzwerk-Slice den Verkehr in einem anderen Netzwerk-Slice stören kann. Dies verringert das Risiko der Einführung und des Betriebs neuer Dienste und unterstützt auch die Migration, da neue Technologien oder Architekturen auf isolierten Slices gestartet werden können. Es hat auch Auswirkungen auf die Sicherheit, denn wenn ein Cyber-Angriff eine Slice durchbricht, ist der Angriff eingedämmt und kann sich nicht über diese Slice hinaus ausbreiten.

Jedes Netzwerk Slice wird mit ihrer eigenen Netzwerkarchitektur, ihrem Engineering-Mechanismus und ihrer Netzwerkbereitstellung konfiguriert. Dazu kann jede Netzwerk-slice Managementfähigkeiten erhalten, die je nach Anwendungsfall vom Netzbetreiber oder vom Kunden gesteuert werden können. Die Netzwerk-Slices können unabhängig verwaltet und orchestriert werden.

Gemäß einem ersten Aspekt betrifft die Erfindung ein Verfahren zum Aufbauen einer Roaming-Verbindung über einen Bootstrap-Server mit den folgenden Schritten: Übertragen einer Registrierungsanfrage von einem Kommunikationsendgerät an eine Netzwerkzugangs-Entität eines besuchten Kommunikationsnetzwerks, wobei die Registrierungsanfrage eine Identifikation (UE ID) des Kommunikationsendgeräts umfasst; Weiterleiten der Registrierungsanfrage an einen Bootstrap-Server des besuchten Kommunikationsnetzwerks durch die Netzwerkzugangs-Entität; Übertragen von Netzwerkzugangsdaten für den Zugang zu dem besuchten Kommunikationsnetzwerk durch den Bootstrap-Server an das Kommunikationsendgerät basierend auf der UE ID des Kommunikationsendgeräts, wobei die Netzwerkzugangsdaten Fähigkeiten des besuchten Kommunikationsnetzwerks anzeigen; und Aufbauen der Roaming-Verbindung durch das Kommunikationsendgerät über das besuchte Kommunikationsnetzwerk basierend auf den Netzwerkzugangsdaten. Optional kann die Registrierungsanfrage auch eine globale Identifikation (Global PLMN ID) eines öffentlichen terrestrischen Mobilfunknetzes (PLMN) umfassen und optional kann die Registrierungsanfrage basierend auf der globalen Identifikation des PLMN ID an den Bootstrap-Server weitergeleitet werden.

Bei Verwendung des Bootstrap-Servers kann die Verbindungsprozedur des UEs im besuchten PLMN beschleunigt werden, da das UE nur Kontakt zum Bootstrap-Server aufnehmen muss, um alle relevanten Daten zu erhalten, um eine Kommunikationsverbindung (Roaming) über das besuchte Netzwerk aufzubauen. Es brauchen nicht mehr eine Vielzahl von Netzwerkelementen abgefragt werden unter Nutzung einer Vielzahl verschiedener Schnittstellen, die unter Umständen im besuchten Netzwerk gar nicht vorhanden sind, und evtl. das Aufbauen der Roaming-Verbindung scheitern lassen. Damit erhöht sich die Leistungsfähigkeit und Flexibilität der Kommunikation, insbesondere beim Roaming in 5G Kommunikationsnetzen.

Gemäß einer Ausführungsform umfasst das Verfahren ferner ein Übertragen der Registrierungsanfrage über zumindest ein für Verbindungen zum Bootstrap-Server dediziert festgelegtes Frequenzband und/oder zumindest eine für Verbindungen zum Bootstrap-Server dediziert festgelegte Funkzugangstechnologie (RAT), z.B. 3G/4G/5G.

Dies bringt den Vorteil, dass das Kommunikationsendgerät nicht zuerst alle RATs und alle Frequenzbänder durchsuchen muss und beschleunigt damit den Verbindungsaufbau.

Gemäß einer Ausführungsform umfasst das Verfahren ferner ein Übertragen der Registrierungsanfrage über einen spezifischen Netzwerk-Slice des besuchten Kommunikationsnetzwerks, der für Verbindungen zum Bootstrap-Server dediziert festgelegt ist.

Dies bringt den Vorteil, dass für den Verbindungsaufbau eigens für die Verbindung zum Bootstrap-Server reservierte Ressourcen des besuchten Kommunikationsnetzwerks, d.h. des spezifischen Netzwerk-Slice genutzt werden können, was den Verbindungsaufbau beschleunigt.

Gemäß einer Ausführungsform des Verfahrens geben die Netzwerkzugangsdaten zumindest eine der folgenden Fähigkeiten des besuchten Kommunikationsnetzwerks an: die Fähigkeit, Daten und/oder Sprache zu übertragen, Anzahl und Typ von Netzwerk-Slices des besuchten Kommunikationsnetzwerks, Unterstützung bestimmter Netzwerk-Slice Funktionen, Unterstützung von 2G/3G, 4G und/oder 5G Roaming, Unterstützung eines bestimmten Dienstes durch das besuchte Kommunikationsnetzwerk.

Dies bringt den Vorteil, dass das UE auf einfache Weise über die Fähigkeiten des besuchten Netzwerks informiert wird und so entscheiden kann, ob es eine Roaming-Verbindung aufbauen kann, d.h. ob die Fähigkeiten des besuchten Netzwerks zu den Fähigkeiten des UE passen. Ein 4G UE kann beispielsweise eine Roaming-Verbindung aufbauen, wenn das besuchte Netzwerk 4G unterstützt.

Gemäß einer Ausführungsform umfasst das Verfahren ferner: Bestimmen einer PLMN ID eines Heimatkommunikationsnetzwerks des Kommunikationsendgeräts durch den Bootstrap-Server basierend auf der UE ID; Abfragen von teilnehmerspezifischen Registrierungsdaten des Kommunikationsendgeräts von einer Datenbasis des Heimatkommunikationsnetzwerks basierend auf einer PLMN ID des Heimatkommunikationsnetzwerks; und Übertragen der Netzwerkzugangsdaten basierend auf den teilnehmerspezifischen Registrierungsdaten des Kommunikationsendgeräts.

Dies bringt den Vorteil, dass der Bootstrap-Server alle nötigen Daten von den entsprechenden Netzwerkelementen abfragen kann und damit sich die Roaming-Prozedur für das UE vereinfacht. Der Bootstrap-Server stellt damit dem UE ein Abbild der für das Roaming benötigten Daten zur Verfügung. Das UE braucht daher außer der Kontaktadresse zum Bootstrap-Server, welche über die Global PLMN, bestimmt wird, keine weiteren Daten vorhalten.

Gemäß einer Ausführungsform umfasst das Verfahren: Modifizieren der Netzwerkzugangsdaten basierend auf den teilnehmerspezifischen Registrierungsdaten des Kommunikationsendgeräts durch den Bootstrap-Server und Übertragen der modifizierten Daten durch den Bootstrap-Server an das Kommunikationsendgerät.

Dies bringt den Vorteil, dass der Bootstrap-Server als Steuerungsinstanz in den Roaming-Prozess eingreifen kann, indem er dem UE nur die Daten zur Verfügung stellt, welche an seine Fähigkeiten angepasst sind.

Gemäß einer Ausführungsform des Verfahrens geben die modifizierten Daten eine Auswahl aus den Fähigkeiten des besuchten Kommunikationsnetzwerks basierend auf den teilnehmerspezifischen Registrierungsdaten des Kommunikationsendgeräts an.

Dies bringt den Vorteil, dass sich die Auswahlmöglichkeit des UE auf das Notwendige und Sinnvolle reduziert und somit den Roaming-Prozess im UE vereinfacht. Somit erhält das UE keine Daten, mit denen der Roaming-Prozess gar nicht möglich ist oder zu einem bestimmten Zeitpunkt abbricht. Dies beschleunigt den gesamten Verbindungsaufbau beim Roaming.

Gemäß einer Ausführungsform des Verfahrens zeigen die modifizierten Daten dem Kommunikationsendgerät an, welche Fähigkeiten des besuchten Kommunikationsnetzwerks für das Kommunikationsendgerät geeignet sind.

Dies bringt den Vorteil, dass das UE vorab entscheiden kann, ob es eine Roaming-Verbindung über das besuchte Kommunikationsnetz aufnehmen möchte. Falls die Fähigkeiten des besuchten Netzes nicht geeignet sind, beispielsweise wenn kein 4G oder 5G unterstützt wird, da es sich um ein Circuit-Switched V PLMN handelt, kann das UE sich für ein Roaming über ein anderes V PLMN entscheiden, welches die von ihm gewünschten Fähigkeiten aufweist, auch wenn die Signalstärke zum entsprechenden Einwahlpunkt (Access Point oder Basisstation) schwächer ist als die zum zuerst aufgefundenen V PLMN.

Gemäß einer Ausführungsform umfasst das Verfahren: Abfragen der teilnehmerspezifischen Registrierungsdaten des Kommunikationsendgeräts von der Datenbasis des Heimatkommunikationsnetzwerks über eine Kommunikationsschnittstelle (B2) zwischen dem Bootstrap-Server und der Datenbasis des Heimatkommunikationsnetzwerks.

Dies bringt den Vorteil, dass über die neue Kommunikationsschnittstelle B2 die teilnehmerspezifischen Registrierungsdaten schnell verfügbar sind, da diese Schnittstelle B2 speziell für das Roaming eingerichtet ist.

Gemäß einer Ausführungsform umfasst das Verfahren: Übertragen der Netzwerkzugangsdaten über eine Kommunikationsschnittstelle (B1) zwischen dem Bootstrap-Server und dem Kommunikationsendgerät.

Dies bringt den Vorteil, dass über die neue Kommunikationsschnittstelle B1 die Netzwerkzugangsdaten schnell für das UE verfügbar sind, da diese Schnittstelle B1 speziell für das Roaming eingerichtet ist.

Gemäß einer Ausführungsform umfasst das Verfahren: Abfragen der Netzwerkzugangsdaten durch den Bootstrap-Server von einer Datenbasis des besuchten Kommunikationsnetzwerks über eine Kommunikationsschnittstelle (B3) zwischen dem Bootstrap-Server und der Datenbasis des besuchten Kommunikationsnetzwerks.

Dies bringt den Vorteil, dass über die neue Kommunikationsschnittstelle B3 die Netzwerkzugangsdaten dem UE durch den Bootstrap-Server schnell zur Verfügung gestellt werden können, da diese Schnittstelle B3 speziell für das Roaming eingerichtet ist.

Gemäß einer Ausführungsform des Verfahrens erfolgt das Abfragen der Netzwerkzugangsdaten durch den Bootstrap-Server von der Datenbasis des besuchten Kommunikationsnetzwerks ansprechend auf die Registrierungsanfrage von dem Kommunikationsendgerät oder beim Initialisieren des Bootstrap-Servers in dem besuchten Kommunikationsnetzwerk.

Dies bringt den Vorteil, dass zum einen die Netzwerkzugangsdaten nur dann abgefragt werden, wenn sich auch benötigt werden, so dass der Bootstrap-Server keinen großen Speicher zum Speichern von Netzwerkzugangsdaten verschiedenster UEs vorhalten muss. Im anderen Fall können die Netzwerkzugangsdaten bereits beim Initialisieren des Bootstrap-Servers abgefragt werden, so dass der Roaming-Prozess noch zügiger ablaufen kann, da alle notwendigen Informationen zur gegebenen Zeit bereits im Bootstrap-Server vorhanden sind.

Gemäß einer Ausführungsform des Verfahrens weist die Registrierungsanfrage ferner eine Identifikation eines spezifischen Dienstes auf, nach welchem das Kommunikationsendgerät bei dem besuchten Kommunikationsnetzwerk anfragt; und das Verfahren umfasst ferner: Bereitstellen des spezifischen Dienstes durch das besuchte Kommunikationsnetzwerk basierend auf der Identifikation des spezifischen Dienstes, falls das besuchte Kommunikationsnetzwerk den spezifischen Dienst unterstützt; und Übertragen einer PLMN ID eines anderen Kommunikationsnetzwerks, welches den spezifischen Dienst unterstützt, durch den Bootstrap-Server an das Kommunikationsendgerät, falls das besuchte Kommunikationsnetzwerk den spezifischen Dienst nicht unterstützt.

Dies bringt den Vorteil, dass das UE schnell erfährt, ob das besuchte PLMN einen bestimmten Dienst unterstützt, und falls nicht an ein PLMN verwiesen wird, welches den angefragten Dienst unterstützt. Dies beschleunigt den Roaming-Prozess signifikant.

Gemäß einem zweiten Aspekt betrifft die Erfindung einen Bootstrap-Server zum Aufbauen einer Roaming-Verbindung zwischen einem Kommunikationsendgerät und einem besuchten Kommunikationsnetzwerk, wobei der Bootstrap-Server folgendes umfasst: eine Kommunikationsschnittstelle (B1) mit dem Kommunikationsendgerät zum Empfangen einer Registrierungsanfrage von dem Kommunikationsendgerät, wobei die Registrierungsanfrage eine Identifikation (UE ID) des Kommunikationsendgeräts umfasst; eine Kommunikationsschnittstelle (B2) mit einem Heimatnetzwerk des Kommunikationsendgeräts zum Empfangen von teilnehmerspezifischen Daten des Kommunikationsendgeräts; und einen Prozessor, der ausgebildet ist, Netzwerkzugangsdaten für den Zugang des Kommunikationsendgeräts zu dem besuchten Kommunikationsnetzwerk basierend auf den teilnehmerspezifischen Daten des Kommunikationsendgeräts zu bestimmen und basierend auf der UE ID des Kommunikationsendgeräts an das Kommunikationsendgerät zu übertragen, wobei die Netzwerkzugangsdaten Fähigkeiten des besuchten Kommunikationsnetzwerks angeben. Optional kann die Registrierungsanfrage auch eine globale Identifikation (Global PLMN ID) eines öffentlichen terrestrischen Mobilfunknetzes (PLMN) umfassen.

Bei Verwendung des Bootstrap-Servers kann die Verbindungsprozedur des UEs im besuchten PLMN beschleunigt werden, da das UE nur Kontakt zum Bootstrap-Server aufnehmen muss, um alle relevanten Daten zu erhalten, um eine Kommunikationsverbindung (Roaming) über das besuchte Netzwerk aufzubauen. Es brauchen nicht mehr eine Vielzahl von Netzwerkelementen abgefragt werden unter Nutzung einer Vielzahl verschiedener Schnittstellen, die unter Umständen im besuchten Netzwerk gar nicht vorhanden sind, und evtl. das Aufbauen der Roaming-Verbindung scheitern lassen. Damit erhöht sich die Leistungsfähigkeit und Flexibilität der Kommunikation, insbesondere beim Roaming in 5G Kommunikationsnetzen.

Gemäß einer Ausführungsform des Bootstrap-Servers geben die Netzwerkzugangsdaten zumindest eine der folgenden Fähigkeiten des besuchten Kommunikationsnetzwerks an: die Fähigkeit, Daten und/oder Sprache zu übertragen, Anzahl und Typ von Netzwerk-Slices des besuchten Kommunikationsnetzwerks, Unterstützung bestimmter Netzwerk-Slice Funktionen, Unterstützung von 2G/3G, 4G und/oder 5G Roaming, Unterstützung eines bestimmten Dienstes durch das besuchte Kommunikationsnetzwerk.

Dies bringt den Vorteil, dass das UE auf einfache Weise über die Fähigkeiten des besuchten Netzwerks informiert wird und so entscheiden kann, ob es eine Roaming-Verbindung aufbauen kann, d.h. ob die Fähigkeiten des besuchten Netzwerks zu den Fähigkeiten des UE passen. Ein 4G UE kann beispielsweise eine Roaming-Verbindung aufbauen, wenn das besuchte Netzwerk 4G unterstützt.

Gemäß einem dritten Aspekt betrifft die Erfindung ein Kommunikationsendgerät, mit: einer Kommunikationsschnittstelle (N1) zu einem besuchten Kommunikationsnetzwerk zum Übertragen einer Registrierungsanfrage an eine Netzwerkzugangs-Entität des besuchten Kommunikationsnetzwerks, wobei die Registrierungsanfrage eine Identifikation (UE ID) des Kommunikationsendgeräts umfasst; einer Kommunikationsschnittstelle (B1) zu einem Bootstrap-Server zum Empfangen von Netzwerkzugangsdaten für den Zugang zu dem besuchten Kommunikationsnetzwerk, wobei die Netzwerkzugangsdaten Fähigkeiten des besuchten Kommunikationsnetzwerks angeben; und einem Prozessor, der ausgebildet ist, eine Roaming-Verbindung über das besuchte Kommunikationsnetzwerk basierend auf den Netzwerkzugangsdaten aufzubauen. Optional kann die Registrierungsanfrage auch eine globale Identifikation (Global PLMN ID) eines öffentlichen terrestrischen Mobilfunknetzes (PLMN) umfassen.

Bei Verwendung eines solchen Kommunikationsendgeräts zusammen mit einem Bootstrap-Server, wie oben angegeben, kann die Verbindungsprozedur des UEs im besuchten PLMN beschleunigt werden, da das UE nur Kontakt zum Bootstrap-Server aufnehmen muss, um alle relevanten Daten zu erhalten, um eine Kommunikationsverbindung (Roaming) über das besuchte Netzwerk aufzubauen. Es brauchen nicht mehr eine Vielzahl von Netzwerkelementen abgefragt werden unter Nutzung einer Vielzahl verschiedener Schnittstellen, die unter Umständen im besuchten Netzwerk gar nicht vorhanden sind, und evtl. das Aufbauen der Roaming-Verbindung scheitern lassen. Damit erhöht sich die Leistungsfähigkeit und Flexibilität der Kommunikation, insbesondere beim Roaming in 5G Kommunikationsnetzen.

Gemäß einer Ausführungsform des Kommunikationsendgeräts umfasst die Kommunikationsschnittstelle (N1) zu dem besuchten Kommunikationsnetzwerk eine N1-Schnittstelle eines 5G Kernnetzwerks; und die Netzwerkzugangs-Entität umfasst eine AMF-Entität des 5G Kernnetzwerks.

Dies bringt den Vorteil, dass über die N1-Schnittstelle zur Netzwerkzugangs-Entität alle notwendigen Zugangssteuerung- und Mobilitätsfunktionen ausgeführt werden können. Damit können die Ressourcen und die Netzwerktopologie für einen bestimmten Dienst und Verkehr in optimaler Weise bereitgestellt werden. Über die N1-Schnittstelle können Funktionen wie Geschwindigkeit, Kapazität, Konnektivität und Abdeckung dem UE zugewiesen werden, um die besonderen Anforderungen des entsprechenden Anwendungsfalls zu erfüllen, aber funktionale Komponenten können auch über verschiedene Netzwerk-Slices hinweg gemeinsam genutzt werden.

Gemäß einem vierten Aspekt betrifft die Erfindung ein Kommunikationssystem, insbesondere ein 5G Kommunikationsnetzwerk, mit: einem Kommunikationsendgerät gemäß dem dritten Aspekt; einem besuchten Kommunikationsnetzwerk des Kommunikationsendgeräts; einem Heimatkommunikationsnetzwerk des Kommunikationsendgeräts; und einem Bootstrap-Server gemäß dem zweiten Aspekt, der ausgebildet ist, dem Kommunikationsendgerät Netzwerkzugangsdaten für den Zugang zu dem besuchten Kommunikationsnetzwerk bereitzustellen, wobei das Kommunikationsendgerät ausgebildet ist, eine Roaming-Verbindung über das besuchte Kommunikationsnetzwerk basierend auf den Netzwerkzugangsdaten aufzubauen.

Ein solches Kommunikationssystem bietet die oben beschriebenen Vorteile. D.h. bei Verwendung eines solchen Kommunikationsendgeräts zusammen mit einem Bootstrap-Server, wie oben angegeben, kann die Verbindungsprozedur des UEs im besuchten PLMN beschleunigt werden, da das UE nur Kontakt zum Bootstrap-Server aufnehmen muss, um alle relevanten Daten zu erhalten, um eine Kommunikationsverbindung (Roaming) über das besuchte Netzwerk aufzubauen. Es brauchen nicht mehr eine Vielzahl von Netzwerkelementen abgefragt werden unter Nutzung einer Vielzahl verschiedener Schnittstellen, die unter Umständen im besuchten Netzwerk gar nicht vorhanden sind, und evtl. das Aufbauen der Roaming-Verbindung scheitern lassen. Damit erhöht sich die Leistungsfähigkeit und Flexibilität der Kommunikation, insbesondere beim Roaming.

Weitere Ausführungsbeispiele werden Bezug nehmend auf die beiliegenden Zeichnungen erläutert. Es zeigen:
Fig. 1 eine schematische Darstellung einer 5G Systemarchitektur 100;
Fig. 2 eine schematische Darstellung des Roaming-Szenarios für ein 5G-Kommunikationsnetzwerk 200 mit Bootstrap Server 201 gemäß einer beispielhaften Ausführungsform;
Fig. 3 eine schematische Darstellung eines Bootstrap Servers 201 gemäß einer beispielhaften Ausführungsform.
Fig. 4 eine schematische Darstellung eines Kommunikationsendgeräts 202 gemäß einer beispielhaften Ausführungsform; und
Fig. 5 eine schematische Darstellung eines Roaming-Verfahrens 500 gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

Im Folgenden werden Bootstrap-Server und Funktionen eines solchen Bootstrap-Servers (Bootstrapping Server Funktionen) beschrieben. Eine Bootstrapping Server Funktion (BSF) bezeichnet ein technisches Vermittlerelement zwischen einander zuvor unbekannten Endgeräten und Servern, welches die wechselseitige Authentifizierung und - darauf aufbauend - den Austausch geheimer Schlüssel und weiterer Zugangsinformationen gestattet. Hierdurch ist die Nutzung allgemeiner Zusatzdienste und Anwendungen möglich, die eine Authentifizierung und eine gesicherte Kommunikationsbeziehung voraussetzen.

Beteiligt an der Unterhaltung einer solchen generischen Sicherheitsbeziehung sind die folgenden Funktionselemente: Endgerät, z. B. ein Mobiltelefon, kurz User Equipment (UE), das einen bestimmten Dienst nutzen will, Anwendungsserver, der den Dienst bereitstellt, z. B. für Mobile TV, VoLTE, VolP, FTP Datentransfer, Media Streaming, Internet Browsing, etc., kurz Network Application Function bzw. Netzwerkanwendungsfunktion (NAF), die Bootstrapping Server Funktion (BSF) selbst, welche zwischen UE und NAF eine Sicherheitsbeziehung vermittelt sowie eine Datenbasis des Heimnetzwerks, z.B. HSS Home Subscriber Server (HSS) oder UDR, Unified Data Repository des (Mobilfunk-)Netzproviders, welche die jeweiligen benutzerspezifischen Profile seiner Endgerätebenutzer verwaltet.

Der Begriff Bootstrapping bezeichnet hier die technische Funktion, zunächst zu einem vorher sicherheitstechnisch unbekannten Gerät eine Sicherheitsbeziehung aufzubauen, um dann jeweils im Gerät selbst und im BSF Sicherheitselemente (Schlüssel) installieren zu können. Beispielsweise können die Protokolle Diameter und Hypertext Transfer Protocol (http) eingesetzt werden; u. U. kann zwischen BSF und NAF anstatt Diameter auch SOAP Verwendung finden.

Das BSF wird vom Anwendungsserver (NAF) hinzugezogen, nachdem ein Endgerät bei diesem um Dienstzugang gebeten hat. Da der Anwendungsserver das Endgerät zu diesem Zeitpunkt noch nicht kennt, verweist er dieses zunächst weiter an das BSF. Das Endgerät und das BSF authentisieren sich nun beiderseits; dies kann beispielsweise mittels des Protokolls AKA (Authentication and Key Agreement) geschehen und per Anfragen des BSFs an den Home Subscriber Server (HSS) bzw. die UDR Datenbasis des Heimatnetzwerks. Anschließend einigen sich BSF und Endgerät (UE) auf einen Sitzungsschlüssel, der zum verschlüsselten Datenaustausch mit dem Anwendungsserver (NAF) genutzt werden soll. Wendet sich das Endgerät nun erneut an den Anwendungsserver, so kann dieser sowohl den Sitzungsschlüssel als auch benutzerspezifische Daten vom BSF beziehen und den Datenaustausch mit dem Endgerät (UE) beginnen. Dabei werden die passenden Sitzungsschlüssel zur kryptographischen Absicherung verwendet.

Die Sicherheitsbeziehung selbst, zwischen Endgerät und Server, verlässt dabei nie die Hoheit des (Mobilfunk-)Netzbetreibers, nur von dieser Sicherheitsbeziehung abgeleitete Daten (Schlüssel) können abgefragt und von Applikationen verwendet werden.

Der in dieser Offenbarung beschriebene Bootstrap-Server dient insbesondere dazu, den Aufbau der Roaming-Verbindung des Kommunikationsendgeräts zu vereinfachen, wie im Folgenden in dieser Offenbarung beschrieben.

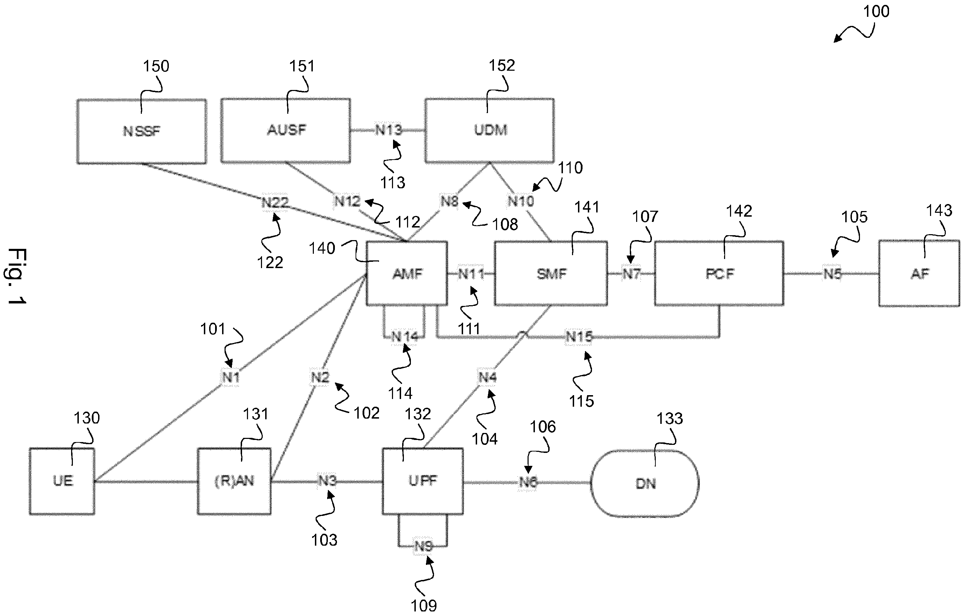

Fig. 1 zeigt eine schematische Darstellung einer 5G Systemarchitektur 100. Die 5G Systemarchitektur 100 umfasst die in den einzelnen Blöcken der Figur 1 dargestellten Netzwerkfunktionen.

Der Block UE (User Equipment) 130 stellt das User Equipment bzw. Client Terminal oder mobile Kommunikationsgerät dar, welches von dem Teilnehmer bedient werden kann, um eine Kommunikation im 5G Netzwerk zu initiieren, d.h. eine Kommunikation zu starten (mobile originating, MO) oder anzunehmen (mobile terminating, MT). Da UE kann auch ohne Nutzerinteraktion eine Kommunikation initiieren, z.B. kann es ein Maschinenterminal sein, z.B. für ein Auto oder einen Roboter oder ein sonstiges Gerät.

Der Block (R)AN ((Radio) Access Network) 131 stellt das (Funk-) Zugangsnetz dar, mit dem das UE 130 Zugang zum 5G Kommunikationsnetz erhält. Die Schnittstelle zwischen UE 130 und (R)AN ist entweder eine Luftschnittstelle, wenn es sich bei dem Zugangsnetz 131 um ein Funknetz handelt oder kabelgebunden, wenn das Zugangsnetz ein drahtgebundenes Netz ist.

Der Block AMF (Access and Mobility Management Function) 140 stellt die Zugangs- und Mobilitätsmanagement Funktion dar. Diese verwalted die Zugangs- und Mobilitätssteuerung. Die AMF kann auch Netzwerkslice Auswahlfunktionalität umfassen. Bei drahtlosem Zugang wird die Mobilitätsverwaltung nicht benötigt.

Der Block SMF (Session Management Function) 141 stellt die SitzungsverwaltungsFunktion dar. Diese setzt Sitzungen auf und verwaltet diese entsprechend der Netzwerk Policy bzw. Netzwerkplanung.

Der Block UPF (User Plane Function) 132 stellt die User Plane Funktion dar. UPFs können in verschiedenen Konfigurationen und Orten angewendet werden, entsprechend dem Diensttyp.

Der Block PCF (Policy Control Function) 142 stellt die Policy (bzw. Planungs) SteuerungsFunktion dar. Diese stellt ein Policy-Framework bereit, welches Network Slicing, Roaming und Mobilitätsmanagement beinhaltet. Dies entspricht der Funktionalität einer PCRF in 4G-Systemen.

Der Block UDM (Unified Data Management) 152 stellt ein gemeinsames Datenmanagement zur Verfügung. Damit werden Teilnehmerdaten und -profile gespeichert. Dies entspricht der Funktionalität eines HSS in 4G-Systemen, wird jedoch sowohl für den mobilen als auch den drahtgebundenen Zugang im NG Core Netz genutzt.

Der Block DN (Data Network) 133 stellt das Datennetzwerk zur Verfügung, über welches Daten übertragen werden, z.B. von einem UE zu einem anderen UE.

Der Block AUSF (Authentication Server Function) 151 stellt Authentifizierungsfunktionalität zur Verfügung, mit der sich der Teilnehmer bzw. das UE im Netzwerk anmelden kann.

Der Block AF (Application Function) 151 stellt Anwendungsfunktionen zur Verfügung, mit denen bestimmte Dienste ausgeführt werden können.

Der Block NSSF (Network Slice Selection Function) 150 stellt Funktionen zur Verfügung, um bestimmte Networkslices auszuwählen.

Die in Figur 1 dargestellte 5G Systemarchitektur stellt die Struktur des NG (NextGeneration)-Netzwerks dar, welches aus Netzwerkfunktionen (NFs) und Referenzpunkten besteht, welche die NFs verbinden. Das UE 130 ist entweder mit einem Funkzugangsnetz (Radio Access Network, RAN) 131 oder einem Zugangsnetz (Access Network, AN) 131 verbunden. Außerdem ist das UE 130 mit der Zugangs- und Mobilitätsfunktion (AMF) 140 verbunden. Das RAN 131 stellt eine Basisstation dar, die neue RAT und weiterentwickelte LTE Technologien verwendet, während das AN 131 eine allgemeine Basisstation mit Nicht-3GPP Zugang, z.B. WiFi darstellt. Das NextGeneration-Kernnetzwerk 100 besteht aus verschiedenen Netzwerkfunktionen (NFs). In Figur 1 gibt es sieben NextGeneration Kern-NFs, nämlich (1) AMF 140, (2) Sitzungsverwaltungsfunktion (SMF) 141, (3) Richtlinienkontrollfunktion (PCF) 142, (4) Anwendungsfunktion (AF) 143, (5) Authentifizierungsserverfunktion (AUSF) 151, (6) Benutzer-Ebenenfunktion (UPF) 132 und (7) Benutzerdatenverwaltung (UDM) 152.

Die Netzwerkfunktion (NF) stellt die von 3GPP übernommene Verarbeitungsfunktion in NextGen bzw. NG dar. Sie hat sowohl funktionelles Verhalten und dient gleichzeitig als Schnittstelle. Eine NF kann entweder als Netzwerkelement implementiert werden auf einer dedizierten Hardware, als Software-Instanz auf einer dedizierten Hardware oder als virtualisierte Funktion instanziiert auf einer geeigneten Plattform, z. B. einer Cloud-Infrastruktur.

Die AMF 140 bietet UE-basierte Authentifizierung, Autorisierung, Mobilitätsmanagement, etc. Ein UE 130 ist grundsätzlich mit einer einzigen AMF 140 verbunden, da die AMF 140 unabhängig von der Zugriffstechnologie ist. D.h. auch ein UE 130 mit Multiple-Access-Technologien ist nur mit einer einzigen AMF 140 verbunden.

Die SMF 141 ist für die Sitzungsverwaltung zuständig und weist den UEs 130 IP-Adressen zu. Außerdem wählt die SMF 141 die UPF 132 aus und steuert die UPF 132 bzgl. des Datentransfers. Wenn eine UE 130 mehrere Sitzungen hat, können verschiedene SMFs 141 jeder Sitzung zugeordnet sein, um sie einzeln zu steuern und möglicherweise mehrere Funktionalitäten pro Sitzung bereitzustellen.

Die AF 143 bietet Informationen über den Paketfluss und stellt sie der PCF 142 bereit, die für die Policy-Steuerung verantwortlich ist, um so den Quality of Service (QoS) zu gewährleisten. Basierend auf diesen Informationen bestimmt PCF 142 die Richtlinien über Mobilität und Sitzungsverwaltung, damit die AMF 140 und die SMF 141 ordnungsgemäß funktionieren.

Die AUSF 151 speichert Daten für die Authentifizierung der UE 130, während die UDM 152 Abonnementdaten bzw. Teilnehmerdaten der UE 130 speichert. Das Datennetzwerk DN 133, das nicht Teil des NG Core Netzwerks 100 ist, sorgt für den Internet-Zugang und die Betreiberdienste.

Die Referenzpunktdarstellung der Architektur kann verwendet werden, um detaillierte Nachrichtenabläufe in der Next Generation (NG) Standardisierung darzustellen. Der Referenzpunkt Next Generation (NG) 1 101 ist definiert als Übertragungssignalisierung zwischen der UE 130 und der AMF 140. Die Bezugspunkte für die Verbindung zwischen dem AN 131 und der AMF 140 und zwischen dem AN 131 und der UPF 132 sind als NG2 102 bzw. NG3 103 definiert. Es gibt keinen Referenzpunkt zwischen dem AN 131 und der SMF 141, aber es gibt einen Bezugspunkt, NG11 111, zwischen der AMF 140 und der SMF 141. Dies bedeutet, dass die SMF 141 von der AMF 140 gesteuert wird. NG4 104 wird von der SMF 141 und der UPF 132 verwendet, damit die UPF 132 mit dem erzeugten Steuersignal von der SMF 141 eingestellt werden kann, und die UPF 132 kann ihren Status an die SMF 141 melden. NG9 109 ist der Bezugspunkt für die Verbindung zwischen verschiedenen UPFs 132 und NG14 114 ist der Bezugspunkt zwischen jeweils verschiedenen AMFs 140. NG15 115 und NG7 107 sind definiert, damit die PCF 142 ihre Richtlinien auf die AMF 140 bzw. die SMF 141 anwenden kann. NG12 112 ist erforderlich, damit die AMF 140 die Authentifizierung der UE 130 durchführen kann. NG8 108 und NG10 110 sind definiert, weil die Abonnementdaten der UE 130 von der AMF 140 und der SMF 141 benötigt werden.

Das Next Generation Netzwerk 100 zielt darauf ab, eine Trennung von Benutzer- und Steuerungs- bzw. Kontrollebene zu realisieren. Die Benutzerebene überträgt den Benutzerdatenverkehr, während die Steuerungsebene die Signalisierung im Netzwerk überträgt. In Figur 1 befindet sich die UPF 132 in der Benutzerebene und alle anderen Netzwerkfunktionen, d.h. AMF 140, SMF 141, PCF 142, AF 143, AUSF 151 und UDM 152 befinden sich in der Steuerungsebene. Die Trennung der Benutzer- und Steuerungsebene garantiert die unabhängige Skalierung der Ressourcen jeder Netzwerkebene. Die Trennung erlaubt auch das Bereitstellen von UPFs 132 in einer verteilten Art und Weise separat von den Funktionen der Steuerungsebene.

Die NG Architektur 100 besteht aus modularisierten Funktionen. Zum Beispiel sind die AMF 140 und die SMF 141 unabhängige Funktionen in der Steuerungsebene. Getrennte AMF 140 und SMF 141 erlauben unabhängige Entwicklung und Skalierung. Andere Steuerungsebenen Funktionen wie die PCF 142 und die AUSF 151 können wie in Figur 1 dargestellt, getrennt werden. Das in Figur 1 dargestellte modularisierte Funktionsdesign ermöglicht dem Next Generation Netzwerk 100 auch ein flexibles Unterstützen verschiedenster Dienste.

Jede Netzwerkfunktion interagiert direkt mit einer anderen NF. In der Steuerungsebene sind eine Reihe von Interaktionen zwischen zwei NFs als Service definiert, so dass ihre Wiederverwendung möglich ist. Dieser Service ermöglicht die Unterstützung von Modularität. Die Benutzerebene unterstützt Interaktionen wie z.B. das Weiterleiten von Operationen zwischen verschiedenen UPFs 132.

Das Next Generation Netzwerk 100 unterstützt das Roaming ähnlich wie bei EPS (Enhanced Packet Switching). Es gibt zwei Arten von Anwendungsszenarien, zum einen Home Routed (HR), zum anderen Lokaler Ausbruch (LBO, "local breakout"). Die Strukturen, welche das Roaming und das entsprechende Sitzungsmanagement entsprechend dem hier vorgestellten Konzept unterstützen, werden im nachfolgenden näher beschrieben.

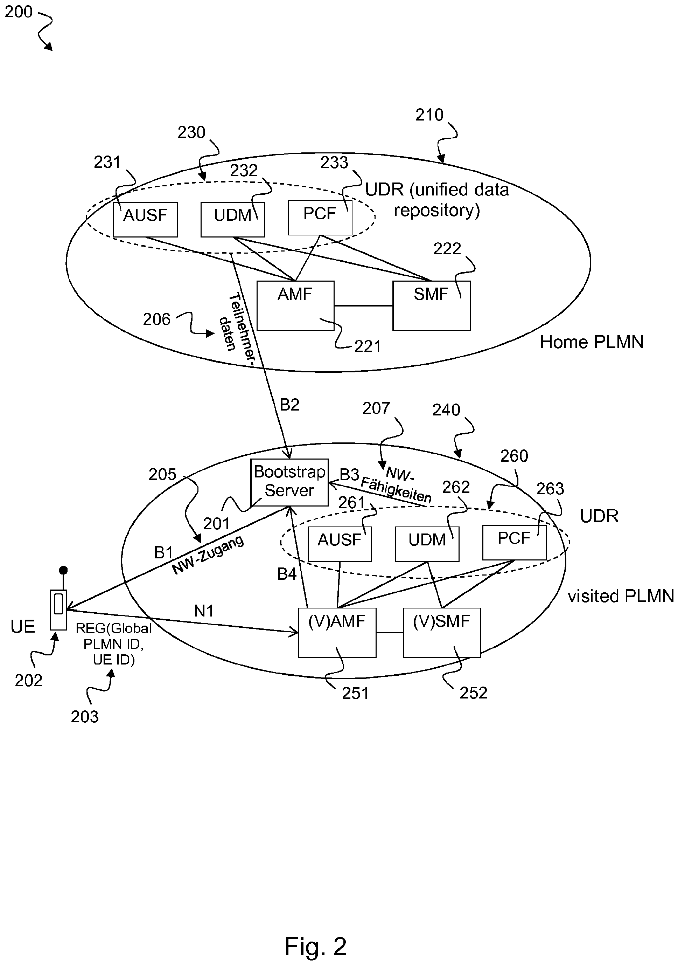

Fig. 2 zeigt eine schematische Darstellung des Roaming-Szenarios für ein 5G-Kommunikationsnetzwerk 200 mit Bootstrap Server 201 gemäß einer beispielhaften Ausführungsform. Das 5G-Kommunikationsnetzwerk 200 ist unterteilt in ein Heimat PLMN (Public Land Mobile Network bzw. öffentliches terrestrisches Mobilfunknetz) 210 und ein besuchtes PLMN 240. Beide Netzwerk 210, 240 habe die gleiche Struktur wie oben in Figur 1 allgemein beschrieben, wobei der Übersichtlichkeit halber nicht alle Netzwerkelemente im Einzelnen dargestellt sind. Insbesondere umfasst das besuchte Netzwerk 240 ein AMF Netzwerkelement 251, hier auch als (V)AMF bezeichnet, welches die gleiche Funktionalität und die gleichen Schnittstellen wie das oben zu Figur 1 beschriebene AMF 140 aufweist. Das besuchte Netzwerk 240 umfasst ferner ein SMF Netzwerkelement 252, hier auch als (V)SMF bezeichnet, welches die gleiche Funktionalität und die gleichen Schnittstellen wie das oben zu Figur 1 beschriebene SMF 141 aufweist. Das besuchte Netzwerk 240 umfasst ferner eine Datenbasis (UDR, "Unified Data Repository") 260 mit den Netzwerkelementen AUSF 261, UDM 262 und PCF 263, welche die gleiche Funktionalität und die gleichen Schnittstellen wie die oben zu Figur 1 beschriebenen Netzwerkelemente AUSF 151, UDM 152 und PCF 142 aufweisen.

Die gleichen Netzwerkelemente (mit den gleichen Funktionalitäten und Schnittstellen) umfasst auch das Heimat PLMN 210, d.h. ein AMF Netzwerkelement 221, ein SMF Netzwerkelement 222 und eine Datenbasis UDR 230 mit den Netzwerkelementen AUSF 231, UDM 232 und PCF 233. Das Heimat PLMN ist das PLMN, in dem das Kommunikationsendgerät bzw. der Nutzer des Kommunikationsendgeräts registriert ist, d.h. in dem er einen Vertrag mit dem Netzwerkbetreiber abgeschlossen hat. Das besuchte PLMN ist das PLMN, in dessen Netzabdeckung sich das Kommunikationsendgerät bzw. sein Nutzer gerade aufhält und über das der Nutzer eine Kommunikation, d.h. eine Roaming-Verbindung aufbauen möchte.

In dem besuchten PLMN befindet sich ein Bootstrap-Server 201, der dazu dient, das Aufbauen der Roaming-Verbindung zu erleichtern, d.h. zu beschleunigen. Der Bootstrap-Server ist über verschiedene Schnittstellen an einzelne Netzwerkelemente des Heimat-PLMNs 210 und des besuchten PLMNs 240 angebunden: Über eine B1 Schnittstelle ist der Bootstrap-Server 201 mit dem UE 202 verbunden. Über eine B4 Schnittstelle ist der Bootstrap-Server 201 mit der (V)AMF 251 des besuchten PLMN 240 verbunden. Über eine B3 Schnittstelle ist der Bootstrap-Server 201 mit der UDR Datenbasis 260 des besuchten PLMN 240 verbunden. Über eine B2 Schnittstelle ist der Bootstrap-Server 201 mit der UDR Datenbasis 230 des Heimat-PLMNs 210 verbunden. Ferner ist das UE 202 über eine N1 Schnittstelle, entsprechend der oben zu Figur 1 beschriebenen Systemarchitektur, mit der (V)AMF 251 des besuchten PLMNs 240 verbunden. Über die N1 Schnittstelle wird eine Registrierungsanfrage 203 mit einer UE Identität (UE ID), z.B. einer IMSI des UE 202 übertragen. Optional kann die Registrierungsanfrage 203 auch eine globale Identifikation (Global PLMN ID) eines öffentlichen terrestrischen Mobilfunknetzes (PLMN) umfassen. Über die UE ID und/oder die optionale Global PLMN ID kann Verbindung mit dem Bootstrap-Server 201 aufgenommen werden, der der UE dann alle notwendigen Daten für den Netzwerkzugang 205 über die B1 Schnittstelle zur Verfügung stellt. Der Bootstrap-Server 201 kann über die B3 Schnittstelle NetzwerkFähigkeiten des besuchten PLMN 240 von der UDR Datenbasis 240 des besuchten PLMN 240 abfragen und er kann über die B2 Schnittstelle Teilnehmerdaten 206 des UEs 202 von dem Heimat PLMN 210 des UEs 202 abfragen.

Im Einzelnen kann das Verfahren zum Aufbauen der Roaming-Verbindung über den Bootstrap-Server 201 wie folgt ablaufen: In einem ersten Schritt wird eine Registrierungsanfrage 203 von dem Kommunikationsendgerät 202 an die Netzwerkzugangs-Entität bzw. (V)AMF 251 des besuchten Kommunikationsnetzwerks 240 übertragen. Die Registrierungsanfrage 203 umfasst die Identifikation (UE ID) des Kommunikationsendgeräts 202. Optional kann die Registrierungsanfrage 203 auch die globale PLMN ID umfassen. Die Registrierungsanfrage 203 wird an den Bootstrap-Server 201 durch die (V)AMF 251 basierend auf der UE ID und/oder der optionalen globalen PLMN ID weitergeleitet, d.h. die (V)AMF 251 erkennt anhand der UE ID und/oder der optionalen globalen PLMN ID, dass es sich um eine Anfrage an den Bootstrap-Server 201 handelt und leitet die Anfrage 203 entsprechend weiter.

In einem weiteren Schritt überträgt der Bootstrap-Server 201 dann die Netzwerkzugangsdaten 205 für den Zugang zu dem besuchten PLMN 240 an das UE 202 und zwar basierend auf der UE ID des Kommunikationsendgeräts 202, welche dem Bootstrap-Server 201 anzeigt, dass die Zugangsdaten 205 über die B1-Schnittstelle zum UE 202 zu übertragen sind. Die Netzwerkzugangsdaten 205 zeigen dabei Fähigkeiten des besuchten Kommunikationsnetzwerks 240 an. Schließlich wird die Roaming-Verbindung durch das Kommunikationsendgerät 202 (und die entsprechenden Netzwerkelemente des besuchten PLMN 240) über das besuchte Kommunikationsnetzwerk 240 basierend auf den Netzwerkzugangsdaten 205 aufgebaut.

Das Übertragen der Registrierungsanfrage 203 kann über eine oder mehrere für Verbindungen zum Bootstrap-Server 201 dediziert festgelegte Frequenzbänder und/oder für Verbindungen zum Bootstrap-Server dediziert festgelegte Funkzugangstechnologien (RAT), z.B. 3G/4G/5G erfolgen. Dies bringt den Vorteil, dass das Kommunikationsendgerät nicht zuerst alle RATs und alle Frequenzbänder durchsuchen muss und beschleunigt damit den Verbindungsaufbau.

Das Übertragen der Registrierungsanfrage 203 kann ferner über einen spezifischen Netzwerk-Slice des besuchten Kommunikationsnetzwerks erfolgen, der für Verbindungen zum Bootstrap-Server 201 dediziert festgelegt ist. Dies bringt den Vorteil, dass für den Verbindungsaufbau eigens für die Verbindung zum Bootstrap-Server reservierte Ressourcen des besuchten Kommunikationsnetzwerks, d.h. des spezifischen Netzwerk-Slice genutzt werden können, was den Verbindungsaufbau beschleunigt.

Die Netzwerkzugangsdaten 205 können beispielsweise folgende Fähigkeiten des besuchten Kommunikationsnetzwerks 240 angeben: die Fähigkeit, Daten und/oder Sprache zu übertragen, Anzahl und Typ von Netzwerk-Slices des besuchten Kommunikationsnetzwerks 240, Unterstützung bestimmter Netzwerk-Slice Funktionen, Unterstützung von 2G/3G, 4G und/oder 5G Roaming, Unterstützung eines bestimmten Dienstes durch das besuchte Kommunikationsnetzwerk 240.

Das Verfahren kann ferner ein Bestimmen der PLMN ID des Heimatkommunikationsnetzwerks 210 des Kommunikationsendgeräts 202 durch den Bootstrap-Server 201 basierend auf der UE ID umfassen. D.h. in dem Bootstrap-Server sind Daten verfügbar, z.B. in Form von Tabellen oder Listen, die anzeigen in welchem Heimatnetz ein UE mit der Identifikation UE ID registriert bzw. gemeldet ist. Der Bootstrap-Server 201 kann ferner teilnehmerspezifische Registrierungsdaten 206 des Kommunikationsendgeräts 202 von der Datenbasis 230 des Heimatkommunikationsnetzwerks 210 basierend auf der PLMN ID des Heimatkommunikationsnetzwerks 210 abfragen und die Netzwerkzugangsdaten 205 basierend auf den teilnehmerspezifischen Registrierungsdaten 206 des Kommunikationsendgeräts 202 an das UE 202 übertragen.

Der Bootstrap-Server 201 kann vor dem Übertragen der Netzwerkzugangsdaten 205 an das UE 202 diese Netzwerkzugangsdaten 205 basierend auf den teilnehmerspezifischen Registrierungsdaten 206 des Kommunikationsendgeräts 202 modifizieren und die modifizierten Daten an das UE 202 übertragen. Die modifizierten Daten können z.B. eine Auswahl aus den Fähigkeiten des besuchten Kommunikationsnetzwerks 240 basierend auf den teilnehmerspezifischen Registrierungsdaten 206 des Kommunikationsendgeräts 202 angeben. Die modifizierten Daten können dem Kommunikationsendgerät 202 beispielsweise anzeigen, welche Fähigkeiten des besuchten Kommunikationsnetzwerks 240 für das Kommunikationsendgerät 202 geeignet sind.

Der Bootstrap-Server 201 kann die teilnehmerspezifischen Registrierungsdaten 206 des UEs 202 von der Datenbasis 230 des Heimatkommunikationsnetzwerks 210 über die Kommunikationsschnittstelle B2 zwischen dem Bootstrap-Server 201 und der Datenbasis 230 des Heimatkommunikationsnetzwerks 210 abfragen. Dies kann eine direkte Schnittstelle zwischen Bootstrap-Server 201 und den Netzwerkelementen der Datenbasis 230 sein oder es kann eine zuvor aufgebaute Schnittstelle B2 sein, welche vorhandene Schnittstellen entsprechend der 5G Systemarchitektur aus Figur 1 nutzt.

Die Netzwerkzugangsdaten 205 können über eine Kommunikationsschnittstelle B1 zwischen dem Bootstrap-Server 201 und dem Kommunikationsendgerät 202 übertragen werden. Auch diese Schnittstelle B1 kann eine direkte Schnittstelle zwischen Bootstrap-Server 201 und UE 202 sein oder es kann eine zuvor aufgebaute Schnittstelle B1 sein, welche vorhandene Schnittstellen entsprechend der 5G Systemarchitektur aus Figur 1 nutzt, z.B. die N1 Schnittstelle zwischen UE 202 und (V)AMF 251 und die B4 Schnittstelle zwischen (V)AMF 251 und Bootstrap-Server 201.

Das Abfragen der Netzwerkzugangsdaten 205 durch den Bootstrap-Server 201 von der Datenbasis 260 des besuchten Kommunikationsnetzwerks 240 kann über eine Kommunikationsschnittstelle B3 zwischen dem Bootstrap-Server 201 und der Datenbasis 260 des besuchten Kommunikationsnetzwerks 240 erfolgen. Die Schnittstelle B3 kann eine direkte Schnittstelle zwischen Bootstrap-Server 201 und den Netzwerkelementen der Datenbasis 260 sein oder es kann eine zuvor aufgebaute Schnittstelle B3 sein, welche vorhandene Schnittstellen entsprechend der 5G Systemarchitektur aus Figur 1 nutzt.

Das Abfragen der Netzwerkzugangsdaten 205 durch den Bootstrap-Server 201 von der Datenbasis 260 des besuchten Kommunikationsnetzwerks 240 kann entweder ansprechend auf die Registrierungsanfrage 203 von dem Kommunikationsendgerät 202 erfolgen oder alternativ beim Initialisieren des Bootstrap-Servers 201 in dem besuchten Kommunikationsnetzwerk 240.

Die Registrierungsanfrage 203 kann ferner eine Identifikation eines spezifischen Dienstes aufweisen, nach welchem das Kommunikationsendgerät 202 bei dem besuchten Kommunikationsnetzwerk 240 anfragt. Das Bereitstellen des spezifischen Dienstes durch das besuchte Kommunikationsnetzwerk 240 kann basierend auf der Identifikation des spezifischen Dienstes erfolgen, falls das besuchte Kommunikationsnetzwerk 240 den spezifischen Dienst unterstützt. Falls das besuchte Kommunikationsnetzwerk 240 den spezifischen Dienst nicht unterstützen sollte, kann der Bootstrap-Server 201 auch eine PLMN ID eines anderen Kommunikationsnetzwerks übertragen, welches den spezifischen Dienst unterstützt.

Im Folgenden ist ein beispielhafter Ablauf der Nachrichtenübertragung zum Aufbau der Roaming-Verbindung beschrieben. In einem ersten Schritt registriert sich das UE 202 im Netz, d.h. dem V PLMN 240, mit seiner UE ID und dem global PLMN, beispielsweise anhand der oben beschriebenen Registrierungsnachricht 203. In einem zweiten Schritt leitet das V PLMN 240 anhand der Global PLMN die Registrierung 203 zu dem Bootstrap Server 201 weiter und baut die Schnittstelle B1 zum Bootstrap Server 201 auf. In einem dritten Schritt erkennt der Bootstrap Server 201 erkennt das Home PLMN 210 des UE 202 anhand der UE ID. In Schritt 4 besorgt der Bootstrap Server 201 die notwendigen Daten aus der UDR Datenbasis 230 des Home PLMN 210 über die neue B2 Schnittstelle und notwendige Daten aus der UDR Datenbasis 260 des Visiting PLMN 240 über die neue B3 Schnittstelle. In Schritt 5 stellt der Bootstrap Server 201 dem UE 202 die Daten aus H-UDR 230 und V-UDR 260 über die B1 Schnittstelle bereit; evtl. werden H-UDR Daten durch V-UDR Daten modifiziert oder ergänzt. Im sechsten Schritt erfolgt schließlich die Auswahl des PLMN und der Rufaufbau mit den über den Bootstrap Server 201 bereitgestellten Daten.

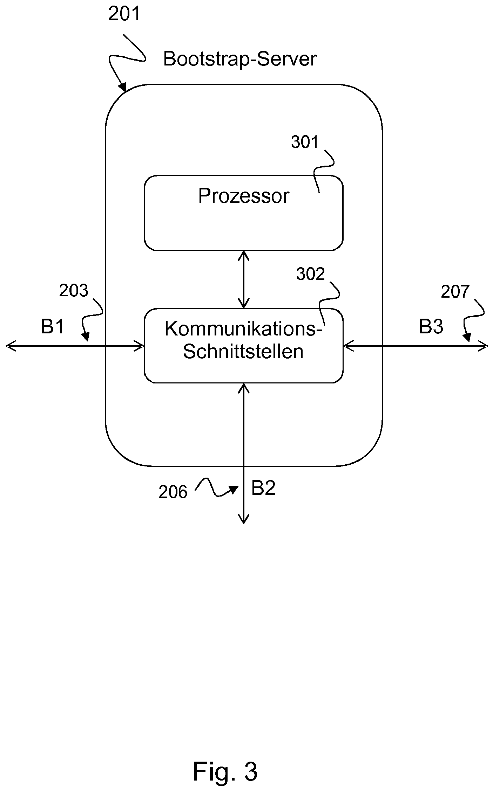

Fig. 3 zeigt eine schematische Darstellung eines Bootstrap-Servers 201 gemäß einer beispielhaften Ausführungsform. Der Bootstrap-Server 201 kann in Hardware oder Software realisiert sein, beispielsweise als eine BSF (Bootstrap-Server Funktion) wie oben beschrieben. Der Bootstrap-Server kann im besuchten PLMN angebracht sein, wie in Figur 2 dargestellt, z.B. in einem zentralen Bereich des besuchten PLMN oder in einer Netzwerk-Slice des besuchten PLMN, die speziell dafür vorgesehen ist.

Der Bootstrap-Server 201 umfasst die folgenden drei, oben zu Figur 2 bereits beschriebenen Kommunikationsschnittstellen: eine Kommunikationsschnittstelle B1 mit dem Kommunikationsendgerät 202 zum Empfangen der Registrierungsanfrage 203 von dem Kommunikationsendgerät 202, welche eine Identifikation (UE ID) des Kommunikationsendgeräts 202 und optional die globale ID eines PLMN umfasst, wie oben zu Figur 2 beschrieben; eine Kommunikationsschnittstelle B2 mit dem Heimatnetzwerk 210 des Kommunikationsendgeräts 202 zum Empfangen von teilnehmerspezifischen Daten 206 des Kommunikationsendgeräts 202, wie oben zu Figur 2 beschrieben; und eine Kommunikationsschnittstelle B3 mit dem besuchten PLMN 240, insbesondere der UDR Datenbasis 260, zum Empfangen von Informationen über Netzwerkfähigkeiten 207 des besuchten PLMN 240, wie oben zu Figur 2 beschrieben. Der Bootstrap-Server 201 umfasst ferner einen Prozessor 301, der ausgebildet ist, Netzwerkzugangsdaten 205 für den Zugang des Kommunikationsendgeräts 202 zu dem besuchten Kommunikationsnetzwerk 240 basierend auf den teilnehmerspezifischen Daten 206 des Kommunikationsendgeräts 202 zu bestimmen und basierend auf der UE ID des Kommunikationsendgeräts 202 an das Kommunikationsendgerät 202 zu übertragen, wobei die Netzwerkzugangsdaten 205 Fähigkeiten des besuchten Kommunikationsnetzwerks 240 angeben. Die Netzwerkzugangsdaten 205 können entweder alleine aus den Teilnehmerdaten 206 aus dem Heimat PLMN 210 bestimmt werden oder zusätzlich unter Zuhilfenahme der Netzwerkfähigkeiten des besuchten PLMN 240.

Das Übertragen der Registrierungsanfrage 203 kann über eine oder mehrere für Verbindungen zum Bootstrap-Server 201 dediziert festgelegte Frequenzbänder und/oder für Verbindungen zum Bootstrap-Server dediziert festgelegte Funkzugangstechnologien (RAT), z.B. 3G/4G/5G erfolgen. Dies bringt den Vorteil, dass das Kommunikationsendgerät nicht zuerst alle RATs und alle Frequenzbänder durchsuchen muss und beschleunigt damit den Verbindungsaufbau.

Das Übertragen der Registrierungsanfrage 203 kann ferner über einen spezifischen Netzwerk-Slice des besuchten Kommunikationsnetzwerks erfolgen, der für Verbindungen zum Bootstrap-Server 201 dediziert festgelegt ist. Dies bringt den Vorteil, dass für den Verbindungsaufbau eigens für die Verbindung zum Bootstrap-Server reservierte Ressourcen des besuchten Kommunikationsnetzwerks, d.h. des spezifischen Netzwerk-Slice genutzt werden können, was den Verbindungsaufbau beschleunigt.

Die Netzwerkzugangsdaten 205 können beispielsweise folgende Fähigkeiten des besuchten Kommunikationsnetzwerks 240 angeben: die Fähigkeit, Daten und/oder Sprache zu übertragen, Anzahl und Typ von Netzwerk-Slices des besuchten Kommunikationsnetzwerks 240, Unterstützung bestimmter Netzwerk-Slice Funktionen des besuchten Netzwerks 240, Unterstützung von 2G/3G, 4G und/oder 5G Roaming im besuchten Netzwerk 240, Unterstützung eines bestimmten Dienstes durch das besuchte Kommunikationsnetzwerk 240.

Der Bootstrap Server 201 bildet damit die zentrale Instanz im Core Network des VPLMN 240. Der Bootstrap Server 201 stellt alle benötigten Daten dem UE 202 bereit und holt sich dazu alle nötigen Daten vom Home PLMN 210 und vom Visited PLMN 240. Der Bootstrap Server 201 kann Daten vom Home PLMN 210 mit Daten vom Visited PLMN 240 kombinieren und/oder modifizieren und sie dem UE 202 bereitstellen. Die Daten können für schnelle PLMN Auswahl genutzt werden, z.B. anhand der "Capabilities" bzw. Fähigkeiten (z.B. Voice oder Daten) des (V)PLMN 240 zu bestimmen, welche Slices es im V PLMN 240 gibt bzw. für das UE 202 nutzbar sind, ob 5G Roaming möglich ist oder ob nur 4G oder 2G/3G Roaming möglich ist, welche Frequenzbänder unterstützt werden, ob bestimmte Slice-Funktionen unterstützt werden und wenn nicht, welches andere PLMN diese Slice-Funktionen unterstützt. Der Bootstrap-Server 201 kann damit ein PLMN ID mit einem Slice mit dem gewünschten Service finden.

Die Daten von dem (V)PLMN können zu den Daten aus dem Heimat-PLMN 210 hinzugefügt werden oder die Daten aus dem Home PLMN 210 modifizieren. Es werden neue Schnittstellen zum Bootstrap Server 201 eingeführt, nämlich B1, B2, B3, wie oben und zu Figur 2 beschrieben. Der Global PLMN dient dem UE 202, um Kontakt mit dem Bootstrap Server 201 aufzubauen. Der Bootstrap Server 201 stellt möglichen PLMN IDs bereit, mit denen das UE 202 Kontakt aufnehmen kann. Das UE 202 kann sich nicht nur über ein VPLMN 240 für eine Roaming-Verbindung anmelden, wie in Figur 2 beispielhaft gezeigt, sondern es kann sich bei einer Mehrzahl unterschiedlicher VPLMNs anmelden, um eine Roaming-Verbindung aufzubauen. Der Bootstrap-Server 201 dient dazu, dem UE die geeigneten VPLMNs anzuzeigen. Der Bootstrap-Server 201 kann also eine Vorauswahl geeigneter VPLMNs treffen, so dass die Verbindungsprozedur beschleunigt wird, weil das UE 202 gleich das richtige PLMN auswählen kann.

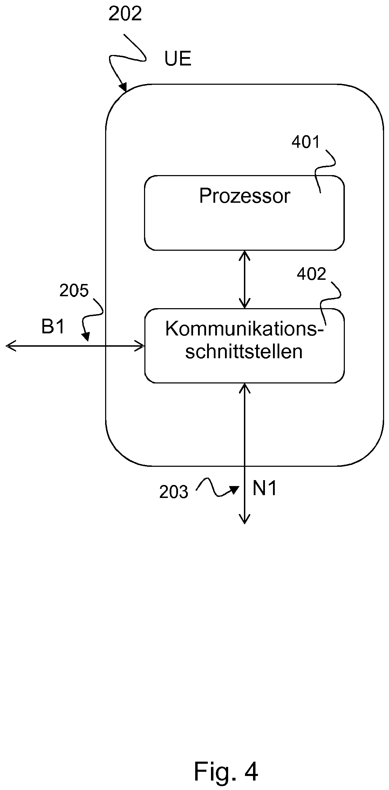

Fig. 4 zeigt eine schematische Darstellung eines Kommunikationsendgeräts 202 gemäß einer beispielhaften Ausführungsform. Das Kommunikationsendgerät 202 umfasst die folgenden zwei, oben zu Figur 2 bereits beschriebenen Kommunikationsschnittstellen: eine Kommunikationsschnittstelle N1 zu dem besuchten Kommunikationsnetzwerk 240 zum Übertragen einer Registrierungsanfrage 203 an eine Netzwerkzugangs-Entität 251 des besuchten Kommunikationsnetzwerks 240, wie oben zu Figur 2 beschrieben. Die Registrierungsanfrage 203 umfasst eine Identifikation (UE ID) des Kommunikationsendgeräts 202 und optional die globale ID eines PLMN; eine Kommunikationsschnittstelle B1 zu einem Bootstrap-Server 201 zum Empfangen von Netzwerkzugangsdaten 205 für den Zugang zu dem besuchten Kommunikationsnetzwerk 240, wie oben zu Figur 2 beschrieben. Die Netzwerkzugangsdaten 205 geben Fähigkeiten des besuchten Kommunikationsnetzwerks 240 an. Das Kommunikationsendgerät 202 umfasst ferner einen Prozessor 401, der ausgebildet ist, eine Roaming-Verbindung über das besuchte Kommunikationsnetzwerk 240 basierend auf den Netzwerkzugangsdaten 205 aufzubauen.

Die Kommunikationsschnittstelle N1 zu dem besuchten Kommunikationsnetzwerk kann beispielsweise eine N1-Schnittstelle eines 5G Kernnetzwerks umfassen wie oben zu Figur 1 und Figur 2 beschrieben. Die Netzwerkzugangs-Entität 251 kann eine AMF-Entität des 5G Kernnetzwerks umfassen, wie oben zu den Figuren 1 und 2 beschrieben.

Das Kommunikationsendgerät und der Bootstrap-Server sind in einem Kommunikationssystem 200 angeordnet, wie in Figur 2 beschrieben, insbesondere einem 5G Kommunikationsnetzwerk. Das Kommunikationssystem 200 umfasst das Kommunikationsendgerät 202, das besuchte Kommunikationsnetzwerk 240 des UEs 202; das Heimatkommunikationsnetzwerk 210 des UEs 202 und den oben beschriebenen Bootstrap-Server 201, welcher dafür ausgebildet ist, dem Kommunikationsendgerät 202 Netzwerkzugangsdaten 205 für den Zugang zu dem besuchten Kommunikationsnetzwerk 240 bereitzustellen, wie oben zu Figur 2 beschreiben. Das Kommunikationsendgerät 202 ist ferner dafür ausgebildet, eine Roaming-Verbindung über das besuchte Kommunikationsnetzwerk 240 basierend auf den Netzwerkzugangsdaten 205 aufzubauen.

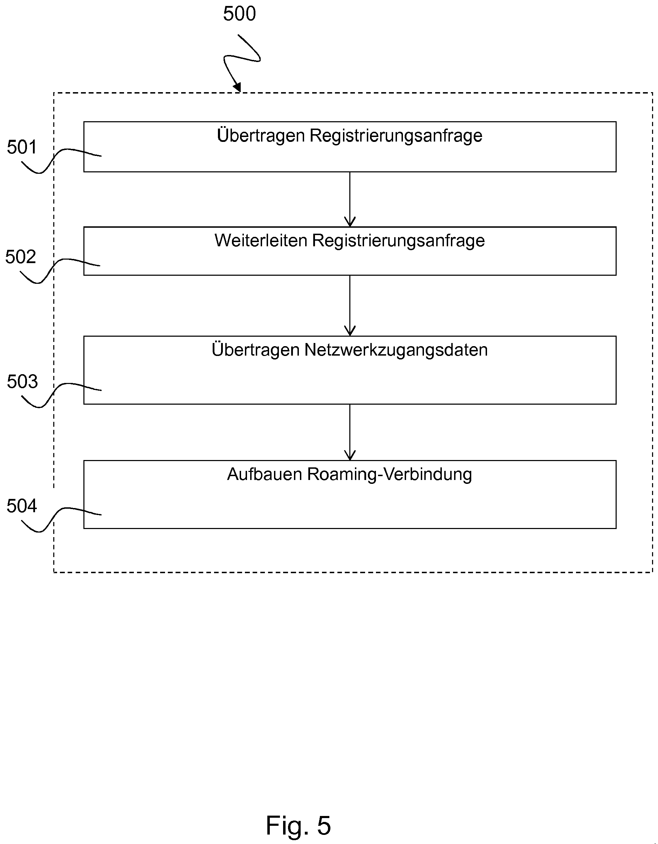

Fig. 5 zeigt eine schematische Darstellung eines Roaming-Verfahrens 500 gemäß einer beispielhaften Ausführungsform.

Das Verfahren 500 dient zum Aufbauen einer Roaming-Verbindung über einen Bootstrap-Server 201, wie z.B. in den Figuren 2 und 3 beschrieben und umfasst die folgenden Schritte: Übertragen 501 einer Registrierungsanfrage 203 von einem Kommunikationsendgerät 202 an eine Netzwerkzugangs-Entität 251 eines besuchten Kommunikationsnetzwerks 240, wobei die Registrierungsanfrage 203 eine Identifikation (UE ID) des Kommunikationsendgeräts 202 und optional eine globale Identifikation (Global PLMN ID) eines öffentlichen terrestrischen Mobilfunknetzes (PLMN) umfasst, wie oben zu Figur 2 beschrieben; Weiterleiten 502 der Registrierungsanfrage 203 an einen Bootstrap-Server 201 des besuchten Kommunikationsnetzwerks 240 durch die Netzwerkzugangs-Entität 251, wie oben zu Figur 2 beschrieben; Übertragen 503 von Netzwerkzugangsdaten 205 für den Zugang zu dem besuchten Kommunikationsnetzwerk 240 durch den Bootstrap-Server 201 an das Kommunikationsendgerät 202 basierend auf der UE ID des Kommunikationsendgeräts 202, wobei die Netzwerkzugangsdaten 205 Fähigkeiten des besuchten Kommunikationsnetzwerks 240 anzeigen, wie oben zu Figur 2 beschrieben; und Aufbauen 504 der Roaming-Verbindung durch das Kommunikationsendgerät 202 über das besuchte Kommunikationsnetzwerk 240 basierend auf den Netzwerkzugangsdaten 205.

Das Verfahren 500 kann weitere Schritte umfassen, wie beispielsweise entsprechend denen oben zu Figur 2 beschriebenen Verfahrensschritten.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 4 beschriebene Verfahren 400 oder die zu den Figuren 3 und 5 beschriebenen Vorgänge ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 400 auszuführen oder die Netzkomponenten der in den Figuren 1 bis 5 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 5 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen, welches in den Ansprüchen spezifiziert ist.

## Patentansprüche

1. Verfahren zum Aufbauen einer Roaming-Verbindung über einen Bootstrap-Server mit den folgenden Schritten:
Übertragen einer Registrierungsanfrage (203) von einem Kommunikationsendgerät (202) an eine Zugangs- und Mobilitätsmanagement Funktion, AMF, -Entität (251) eines besuchten Kommunikationsnetzwerks (240), wobei die Registrierungsanfrage (203) eine Identifikation (UE ID) des Kommunikationsendgeräts (202) umfasst;
Weiterleiten der Registrierungsanfrage (203) an einen Bootstrap-Server (201) des besuchten Kommunikationsnetzwerks (240) durch die AMF-Entität (251);
Übertragen von Netzwerkzugangsdaten (205) für den Zugang zu dem besuchten Kommunikationsnetzwerk (240) durch den Bootstrap-Server (201) an das Kommunikationsendgerät (202) basierend auf der UE ID des Kommunikationsendgeräts (202), wobei die Netzwerkzugangsdaten (205) Fähigkeiten des besuchten Kommunikationsnetzwerks (240) anzeigen; und
Aufbauen der Roaming-Verbindung durch das Kommunikationsendgerät (202) über das besuchte Kommunikationsnetzwerk (240) basierend auf den Netzwerkzugangsdaten (205),
wobei die Registrierungsanfrage (203) über einen spezifischen Netzwerk-Slice des besuchten Kommunikationsnetzwerks (240), der für Verbindungen zum Bootstrap-Server (201) dediziert festgelegt ist, übertragen und weitergeleitet wird.

2. Verfahren nach Anspruch 1, mit:
Übertragen der Registrierungsanfrage (203) über zumindest ein für Verbindungen zum Bootstrap-Server (201) dediziert festgelegtes Frequenzband und/oder zumindest eine für Verbindungen zum Bootstrap-Server (201) dediziert festgelegte Funkzugangstechnologie (RAT).

3. Verfahren nach einem der vorstehenden Ansprüche,
wobei die Netzwerkzugangsdaten (205) zumindest eine der folgenden Fähigkeiten des besuchten Kommunikationsnetzwerks (240) angeben:
die Fähigkeit, Daten und/oder Sprache zu übertragen,
Anzahl und Typ von Netzwerk-Slices des besuchten Kommunikationsnetzwerks (240),
Unterstützung bestimmter Netzwerk-Slice Funktionen,
Unterstützung von 2G/3G, 4G und/oder 5G Roaming,
Unterstützung eines bestimmten Dienstes durch das besuchte Kommunikationsnetzwerk (240).

4. Verfahren nach einem der vorstehenden Ansprüche, ferner mit:
Bestimmen einer globalen öffentlichen terrestrischen Mobilfunknetzwerk-Identifikation (PLMN ID) eines Heimatkommunikationsnetzwerks (210) des Kommunikationsendgeräts (202) durch den Bootstrap-Server (201) basierend auf der UE ID;
Abfragen von teilnehmerspezifischen Registrierungsdaten (206) des Kommunikationsendgeräts (202) von einer Datenbasis (230) des Heimatkommunikationsnetzwerks (210) basierend auf der PLMN ID des Heimatkommunikationsnetzwerks (210); und
Übertragen der Netzwerkzugangsdaten (205) basierend auf den teilnehmerspezifischen Registrierungsdaten (206) des Kommunikationsendgeräts (202).

5. Verfahren nach Anspruch 4, mit:
Modifizieren der Netzwerkzugangsdaten (205) basierend auf den teilnehmerspezifischen Registrierungsdaten (206) des Kommunikationsendgeräts (202) durch den Bootstrap-Server (201) und Übertragen der modifizierten Daten durch den Bootstrap-Server (201) an das Kommunikationsendgerät (202).

6. Verfahren nach Anspruch 5,
wobei die modifizierten Daten eine Auswahl aus den Fähigkeiten des besuchten Kommunikationsnetzwerks (240) basierend auf den teilnehmerspezifischen Registrierungsdaten (206) des Kommunikationsendgeräts (202) angeben.

7. Verfahren nach Anspruch 5 oder 6,
wobei die modifizierten Daten dem Kommunikationsendgerät (202) anzeigen, welche Fähigkeiten des besuchten Kommunikationsnetzwerks (240) für das Kommunikationsendgerät (202) geeignet sind.

8. Verfahren nach einem der Ansprüche 4 bis 7, mit:
Abfragen der teilnehmerspezifischen Registrierungsdaten (206) des Kommunikationsendgeräts (202) von der Datenbasis (230) des Heimatkommunikationsnetzwerks (210) über eine Kommunikationsschnittstelle (B2) zwischen dem Bootstrap-Server (201) und der Datenbasis (230) des Heimatkommunikationsnetzwerks (210).

9. Verfahren nach einem der vorstehenden Ansprüche, mit:
Übertragen der Netzwerkzugangsdaten (205) über eine Kommunikationsschnittstelle (B1) zwischen dem Bootstrap-Server (201) und dem Kommunikationsendgerät (202).

10. Verfahren nach einem der vorstehenden Ansprüche, mit:
Abfragen der Netzwerkzugangsdaten (205) durch den Bootstrap-Server (201) von einer Datenbasis (260) des besuchten Kommunikationsnetzwerks (240) über eine Kommunikationsschnittstelle (B3) zwischen dem Bootstrap-Server (201) und der Datenbasis (260) des besuchten Kommunikationsnetzwerks (240).

11. Verfahren nach Anspruch 10,
wobei das Abfragen der Netzwerkzugangsdaten (205) durch den Bootstrap-Server (201) von der Datenbasis (260) des besuchten Kommunikationsnetzwerks (240) ansprechend auf die Registrierungsanfrage (203) von dem Kommunikationsendgerät (202) erfolgt oder
wobei das Abfragen der Netzwerkzugangsdaten (205) beim Initialisieren des Bootstrap-Servers (201) in dem besuchten Kommunikationsnetzwerk (240) erfolgt.

12. Verfahren nach einem der vorstehenden Ansprüche,
wobei die Registrierungsanfrage (203) ferner eine Identifikation eines spezifischen Dienstes aufweist, nach welchem das Kommunikationsendgerät (202) bei dem besuchten Kommunikationsnetzwerk (240) anfragt; und ferner mit:
Bereitstellen des spezifischen Dienstes durch das besuchte Kommunikationsnetzwerk (240) basierend auf der Identifikation des spezifischen Dienstes, falls das besuchte Kommunikationsnetzwerk (240) den spezifischen Dienst unterstützt; und
Übertragen einer PLMN ID eines anderen Kommunikationsnetzwerks, welches den spezifischen Dienst unterstützt, durch den Bootstrap-Server (201) an das Kommunikationsendgerät (202), falls das besuchte Kommunikationsnetzwerk (240) den spezifischen Dienst nicht unterstützt.

13. Bootstrap-Server (201) zum Aufbauen einer Roaming-Verbindung zwischen einem Kommunikationsendgerät (202) und einem besuchten Kommunikationsnetzwerk (240), wobei der Bootstrap-Server (201) folgendes umfasst:
eine erste Kommunikationsschnittstelle (B4) mit einer Zugangs- und Mobilitätsmanagement Funktion, AMF, -Entität (251) zum Empfangen einer Registrierungsanfrage (203) von dem Kommunikationsendgerät (202), wobei die Registrierungsanfrage (203) eine Identifikation (UE ID) des Kommunikationsendgeräts (202) umfasst;
eine zweite Kommunikationsschnittstelle (B1) mit dem Kommunikationsendgerät (202) zum Übertragen von Netzwerkzugangsdaten (205) an das Kommunikationsendgerät (202);
eine dritte Kommunikationsschnittstelle (B2) mit einem Heimatnetzwerk (210) des Kommunikationsendgeräts (202) zum Empfangen von teilnehmerspezifischen Daten (206) des Kommunikationsendgeräts (202); und
einen Prozessor (301), der ausgebildet ist, Netzwerkzugangsdaten (205) für den Zugang des Kommunikationsendgeräts (202) zu dem besuchten Kommunikationsnetzwerk (240) basierend auf den teilnehmerspezifischen Daten (206) des Kommunikationsendgeräts (202) zu bestimmen und basierend auf der UE ID des Kommunikationsendgeräts (202) über die zweite Kommunikationsschnittstelle (B1) an das Kommunikationsendgerät (202) zu übertragen, wobei die Netzwerkzugangsdaten (205) Fähigkeiten des besuchten Kommunikationsnetzwerks (240) angeben,
wobei die erste Kommunikationsschnittstelle (B4) ausgebildet ist, die Registrierungsanfrage (203) über einen spezifischen Netzwerk-Slice des besuchten Kommunikationsnetzwerks (240), der für Verbindungen zum Bootstrap-Server (201) dediziert festgelegt ist, zu empfangen.

14. Bootstrap-Server (201) nach Anspruch 13,
wobei die Netzwerkzugangsdaten (205) zumindest eine der folgenden Fähigkeiten des besuchten Kommunikationsnetzwerks (240) angeben:
die Fähigkeit, Daten und/oder Sprache zu übertragen,
Anzahl und Typ von Netzwerk-Slices des besuchten Kommunikationsnetzwerks (240),
Unterstützung bestimmter Netzwerk-Slice Funktionen,
Unterstützung von 2G/3G, 4G und/oder 5G Roaming,
Unterstützung eines bestimmten Dienstes durch das besuchte Kommunikationsnetzwerk (240).

## Claims

1. A method for establishing a roaming connection over a bootstrap server comprising the following steps:
transmitting a registration request (203) from a communication terminal (202) to an access and mobility management function, AMF, entity (251) of a visited communication network (240), wherein the registration request (203) comprises an identification (UE ID) of the communication terminal (202);
forwarding the registration request (203) to a bootstrap server (201) of the visited communication network (240) by the AMF entity (251);
transmitting network access data (205) for the access to the visited communication network (240) by the bootstrap server (201) to the communication terminal (202) based on the UE ID of the communication terminal (202), wherein the network access data (205) show capabilities of the visited communication network (240); and
establishing the roaming connection by the communication terminal (202) via the visited communication network (240) based on the network access data (205),
wherein the registration request (203) is transmitted and forwarded via a specific network slice of the visited communication network (240), which is dedicatedly determined for connections to the bootstrap server (201).

2. The method according to claim 1, comprising:
transmitting the registration request (203) via at least a frequency band that is dedicatedly determined for connections to the bootstrap server (201) and/or at least a radio access technology (RAT) that is dedicatedly determined for connections to the bootstrap server (201).

3. The method according to any one of the preceding claims,
wherein the network access data (205) indicate at least one of the following capabilities of the visited communication network (240):
the capability to transmit data and/or speech,
number and type of network slices of the visited communication network (240),
support of specific network slice functions,
support of 2G/3G, 4G and/or 5G roaming,
support of a specific service by the visited communication network (240).

4. The method according to any one of the preceding claims, further comprising:
determining a global public terrestrial mobile network identification (PLMN ID) of a home communication network (210) of the communication terminal (202) by the bootstrap server (201) based on the UE ID;
interrogating user specific registration data (206) of the communication terminal (202) from a database (230) of the home communication network (210) based on the PLMN ID of the home communication network (210); and
transmitting network access data (205) based on the user specific registration data (206) of the communication terminal (202).

5. The method according to claim 4, comprising:
modifying the network access data (205) based on the user specific registration data (206) of the communication terminal (202) by the bootstrap server (201) and transmitting the modified data by the bootstrap server (201) to the communication terminal (202).

6. The method according to claim 5,
wherein the modified data indicate a selection of the capabilities of the visited communication network (240) based on the user specific registration data (206) of the communication terminal (202).

7. The method according to claim 5 or 6,
wherein the modified data indicate to the communication terminal (202) which capabilities of the visited communication network (240) are suitable for the communication terminal (202).

8. The method according to any one of claims 4 to 7, comprising:
interrogating the user specific registration data (206) of the communication terminal (202) from the database (230) of the home communication network (210) via a communication interface (B2) between the bootstrap server (201) and the database (230) of the home communication network (210).

9. The method according to any one of the preceding claims, comprising:
transmitting the network access data (205) via a communication interface (B1) between the bootstrap server (201) and the communication terminal (202).

10. The method according to any one of the preceding claims, comprising:
interrogating the network access data (205) by the bootstrap server (201) from a database (260) of the visited communication network (240) via a communication interface (B3) between the bootstrap server (201) and the database (260) of the visited communication network (240).

11. The method according to claim 10,
wherein the interrogation of the network access data (205) by the bootstrap server (201) from the database (260) of the visited communication network (240) is performed in response to the registration request (203) from the communication terminal (202) or wherein the interrogation of the network access data (205) is performed during initialization of the bootstrap server (201) in the visited communication network (240).

12. The method according to any one of the preceding claims,
wherein the registration request (203) further comprises an identification of a specific service for which the communication terminal (202) interrogates the visited communication network (240); and further comprising:
providing the specific service by the visited communication network (240) based on the identification of the specific service if the visited communication network (240) supports the specific service; and
transmitting a PLMN ID of another communication network which supports the specific service by the bootstrap server (201) to the communication terminal (202) if the visited communication network (240) does not support the specific service.

13. Bootstrap server (201) for establishing a roaming connection between a communication terminal (202) and a visited communication network (240), wherein the bootstrap server (201) comprises the following:
a first communication interface (B4) with an access and mobility management function, AMF, entity (251) for receiving a registration request (203) from the communication terminal (202), wherein the registration request (203) comprises an identification (UE ID) of the communication terminal (202);
a second communication interface (B1) with the communication terminal (202) for transmitting network access data (205) to the communication terminal (202);
a third communication interface (B2) with a home network (210) of the communication terminal (202) for receiving user specific data (206) of the communication terminal (202); and
a processor (301) which is configured to determine network access data (205) for the access of the communication terminal (202) to the visited communication network (240) based on the user specific data (206) of the communication terminal (202) and transmit said network access data (205) to the communication terminal (202) based on the UE ID of the communication terminal (202) via the second communication interface (B1),
wherein the network access data (205) indicate capabilities of the visited communication network (240),
wherein the first communication interface (B4) is configured to receive the registration request (203) via a specific network slice of the visited communication network (240), which is dedicatedly determined for connections to the bootstrap server (201).

14. The bootstrap server (201) according to claim 13,
wherein the network access data (205) indicate at least one of the following capabilities of the visited communication network (240):
the capability to transmit data and/or speech,
number and type of network slices of the visited communication network (240),
support of specific network slice functions,
support of 2G/3G, 4G and/or 5G roaming,
support of a specific service by the visited communication network (240).

## Revendications

1. Procédé d'établissement d'une connexion d'itinérance par l'intermédiaire d'un serveur d'amorçage, comprenant les étapes suivantes :
transmission d'une demande d'enregistrement (203) d'un terminal de communication (202) à une entité à fonction de gestion d'accès et de mobilité AMF (251) d'un réseau de communication visité (240), ladite demande d'enregistrement (203) comprenant une identification (ID d'UE) du terminal de communication (202) ;
transfert par l'entité AMF (251) de la demande d'enregistrement (203) à un serveur d'amorçage (201) du réseau de communication visité (240);
transmission par le serveur d'amorçage (201) au terminal de communication (202) de données d'accès au réseau (205) pour l'accès au réseau de communication visité (240), sur la base de l'ID d'UE du terminal de communication (202), les données d'accès au réseau (205) indiquant des capacités du réseau de communication visité (240) ; et
établissement de la connexion d'itinérance par le terminal de communication (202) sur le réseau de communication visité (240) sur la base des données d'accès au réseau (205),
la demande d'enregistrement (203) étant transmise et transférée au moyen d'une tranche spécifique du réseau de communication visité (240), définie de manière dédiée pour des connexions au serveur d'amorçage (201).

2. Procédé selon la revendication 1, comprenant :
la transmission de la demande d'enregistrement (203) au moyen d'au moins une bande de fréquence définie de manière dédiée pour des connexions au serveur d'amorçage (201) et/ou d'au moins une technologie d'accès radio (RAT) définie de manière dédiée pour des connexions au serveur d'amorçage (201).

3. Procédé selon l'une des revendications précédentes,
où les données d'accès au réseau (205) indiquent au moins une des capacités suivantes du réseau de communication visité (240) :
capacité de transmission de données et/ou de langage verbal,
nombre et type de tranches du réseau de communication visité (240),
assistance à des fonctions de tranche de réseau définies,
assistance à itinérance 2G/3G, 4G et/ou 5G,
assistance d'un service défini par le réseau de communication visité (240).

4. Procédé selon l'une des revendications précédentes, comprenant en outre :
la détermination d'une identification de réseau mobile terrestre public global (ID de PLMN) d'un réseau de communication de rattachement (210) du terminal de communication (202) par le serveur d'amorçage (201) sur la base de l'ID d'UE ;
le demande de données d'enregistrement (206) spécifiques à l'abonné du terminal de communication (202) d'une base de données (230) du réseau de communication de rattachement (210) sur la base de l'ID de PLMN du réseau de communication de rattachement (210) ; et
la transmission des données d'accès au réseau (205) sur la base des données d'enregistrement (206) spécifiques à l'abonné du terminal de communication (202).

5. Procédé selon la revendication 4, comprenant :
la modification par le serveur d'amorçage (201) des données d'accès au réseau (205) sur la base de données d'enregistrement (206) spécifiques à l'abonné du terminal de communication (202) et la transmission des données modifiées par le serveur d'amorçage (201) au terminal de communication (202).

6. Procédé selon la revendication 5,
où les données modifiées indiquent une sélection des capacités du réseau de communication visité (240) sur la base de données d'enregistrement (206) spécifiques à l'abonné du terminal de communication (202).

7. Procédé selon la revendication 5 ou la revendication 6,
où les données modifiées indiquent au terminal de communication (202) quelles capacités du réseau de communication visité (240) sont appropriées pour le terminal de communication (202).

8. Procédé selon l'une des revendications 4 à 7, comprenant :
la demande des données d'enregistrement (206) spécifiques à l'abonné du terminal de communication (202) de la base de données (230) du réseau de communication de rattachement (210), via une interface de communication (B2) entre le serveur d'amorçage (201) et la base de données (230) du réseau de communication de rattachement (210).

9. Procédé selon l'une des revendications précédentes, comprenant :
la transmission des données d'accès au réseau (205) via une interface de communication (B1) entre le serveur d'amorçage (201) et le terminal de communication (202).

10. Procédé selon l'une des revendications précédentes, comprenant :
la demande par le serveur d'amorçage (201) des données d'accès au réseau (205) d'une base de données (260) du réseau de communication visité (240) via une interface de communication (B3) entre le serveur d'amorçage (201) et la base de données (260) du réseau de communication visité (240).

11. Procédé selon la revendication 10,
où la demande des données d'accès au réseau (205) de la base de données (260) du réseau de communication visité (240) par le serveur d'amorçage (201) est effectuée en réaction à la demande d'enregistrement (203) du terminal de communication (202), ou où la demande des données d'accès au réseau (205) est effectuée lors de l'initialisation du serveur d'amorçage (201) dans le réseau de communication visité (240).

12. Procédé selon l'une des revendications précédentes,
où la demande d'enregistrement (203) présente en outre une identification d'un service spécifique, dont le terminal de communication (202) effectue la demande au réseau de communication visité (240) ; et comprenant en outre :
la fourniture du service spécifique par le réseau de communication visité (240) sur la base de l'identification du service spécifique, si le réseau de communication visité (240) assiste le service spécifique ; et
la transmission par le serveur d'amorçage (201) au terminal de communication (202) d'une ID de PLMN d'un autre réseau de communication qui assiste le service spécifique, si le réseau de communication visité (240) n'assiste pas le service spécifique.

13. Serveur d'amorçage (201) pour l'établissement d'une connexion d'itinérance entre un terminal de communication (202) et un réseau de communication visité (240), ledit serveur d'amorçage (201) comprenant :
une première interface de communication (B4) ayant une entité à fonction de gestion d'accès et de mobilité AMF (251) pour la réception d'une demande d'enregistrement (203) du terminal de communication (202), ladite demande d'enregistrement (203) comprenant une identification (ID d'UE) du terminal de communication (202) ;
une deuxième interface de communication (B1) comprenant le terminal de communication (202) pour la transmission de données d'accès au réseau (205) au terminal de communication (202) ;
une troisième interface de communication (B2) comprenant un réseau de rattachement (210) du terminal de communication (202) pour la réception de données (206) spécifiques à l'abonné du terminal de communication (202) ; et
un processeur (301), prévu pour déterminer des données d'accès au réseau (205) pour l'accès du terminal de communication (202) au réseau de communication visité (240) sur la base des données (206) spécifiques à l'abonné du terminal de communication (202) et pour transmettre celles-ci au terminal de communication (202) via la deuxième interface de communication (B1) sur la base de l'ID d'UE du terminal de communication (202), lesdites données d'accès au réseau (205) indiquant des capacités du réseau de communication visité (240),
la première interface de communication (B4) étant prévue pour recevoir la demande d'enregistrement (203) au moyen d'une tranche spécifique du réseau de communication visité (240), définie de manière dédiée pour des connexions au serveur d'amorçage (201).

14. Serveur d'amorçage (201) selon la revendication 13,
où les données d'accès au réseau (205) indiquent au moins une des capacités suivantes du réseau de communication visité (240) :
capacité de transmission de données et/ou de langage verbal,
nombre et type de tranches du réseau de communication visité (240),
assistance à des fonctions de tranche de réseau définies,
assistance à itinérance 2G/3G, 4G et/ou 5G,
assistance d'un service défini par le réseau de communication visité (240).
